# EUROPÄISCHE PATENTSCHRIFT

(11) **EP 0 912 386 B1**
(45) Veröffentlichungstag und Bekanntmachung des Hinweises auf die Patenterteilung: **15.03.2000**
(21) Anmeldenummer: 97932731.9
(22) Anmeldetag: 03.07.1997
(51) Int. Cl.: B62D 1/18

(54) **VORRICHTUNG ZUR VERRIEGELUNG EINER VERSTELLBAREN LENKSÄULE, INSBESONDERE FÜR KRAFTFAHRZEUGE**
DEVICE FOR LOCKING AN ADJUSTABLE STEERING COLUMN, ESPECIALLY FOR MOTOR VEHICLES
DISPOSITIF DE VERROUILLAGE D'UNE COLONNE DE DIRECTION REGLABLE, NOTAMMENT POUR VEHICULES A MOTEUR

(30) Priorität: 19.07.1996 DE 19629246
(43) Veröffentlichungstag der Anmeldung: 06.05.1999
(73) Patentinhaber: ADAM OPEL AG, 65423 Rüsselsheim (DE)
(72) Erfinder: BLEUEL, Walter, D-65719 Hofheim (DE); MARKARD, Wolfgang, D-65439 Flörsheim (DE)
(74) Vertreter: Bergerin, Ralf, Dipl.-Ing.
(86) Internationale Anmeldenummer: DE9701401
(87) Internationale Veröffentlichungsnummer: WO9803386

(56) Entgegenhaltungen:
- DE-A- 3 205 416
- DE-C- 3 920 783

## Beschreibung

Die Erfindung betrifft eine Vorrichtung zur Verriegelung einer verstellbaren Lenksäule nach dem Oberbegriff des Anspruches 1.

Eine derartige Vorrichtung ist aus der DE 39 25 706 C1 bekannt, bei welcher zum Verriegeln der verschwenkbaren Lenksäule eine Klemmeinrichtung mit einem axial auf einer Betätigungsstange angeordneten Exzenterelement vorgesehen ist. Beim Verdrehen der Betätigungsstange wird mittels des Exzenterelementes und einer mit der Betätigungsstange verbundenen Zugstange die Lenksäule zwischen zwei Konsolen (Tragteilen) des Fahrzeugaufbaus eingeklemmt. Nachteilig bei dieser Lösung ist jedoch der komplizierte Aufbau des Exzenterelementes sowie dessen gegenüber der Zugstange versetzte Anordnung außerhalb der Konsolen des Fahrzeugaufbaus.

Der vorliegenden Erfindung liegt die Aufgabe zugrunde, eine Vorrichtung zur Verriegelung einer verstellbaren Lenksäule nach dem Oberbegriff des Anspruches 1 zu schaffen, welche mit reduziertem konstruktiven und herstellungstechnischen Aufwand kompakt aufgebaut ist. Ferner soll im Falle eines Unfalls die Verletzungsgefahr durch die Betätigungselemente reduziert bzw. vermieden werden.

Diese Aufgabe wird erfindungsgemäß durch die kennzeichnenden Merkmale des Anspruches 1 gelöst. Vorteilhafte Weiterbildungen der Erfindung sind in den Unteransprüchen enthalten.

Die mit der Erfindung hauptsächlich erzielten Vorteile bestehen darin, daß die Klemmelemente der Klemmeinrichtung relativ einfach aufgebaut sind, wobei die zum Verriegeln bzw. Entriegeln der Lenksäule vorgesehene Betätigungsstange gegenüber der Lenksäule axial unverschiebbar und kompakt in einem sicherheitstechnisch günstigen und wenig genutzten Raum angeordnet ist. Durch die verschiebbare Lagerung der Betätigungsstange in den Bohrungen der Klemmelemente sowie die in Führungsschlitzen geführten Klemmelemente kann die Lenksäule dabei stufenlos und komfortabel in der Hoch- und Längsrichtung verstellt werden.

Ein weiterer wesentlicher Vorteil der erfindungsgemäßen Vorrichtung besteht darin, daß der mit der Betätigungsstange verbundene Betätigungshebel bedienungsfreundlich nahe des Lenkrades positioniert und ein am freien Ende des Betätigungshebels vorgesehener Griff als Bestandteil einer Lenkschloßmulde für den Zündschlüssel ausgebildet ist. Dadurch kann im Falle eines Unfalls die Verletzungsgefahr durch die Betätigungsstange bzw. den Betätigungshebel wesentlich reduziert werden.

Die Erfindung wird im weiteren anhand der Zeichnung mit zwei Ausführungsbeispielen näher erläutert. Die Zeichnung zeigt teilweise schematisch in
- Fig. 1: einen Querschnitt durch die erfindungsgemäße Vorrichtung im Bereich der Klemmelemente;
- Fig. 2: einen Längsschnitt durch die Vorrichtung gemäß Fig. 1;
- Fig. 3: eine räumliche Ansicht des Lenksäulenträgers und des Halters der Lenksäule vor der Montage der Klemmelemente;
- Fig. 4 und Fig. 5: die Wirkungsweise der Klemmeinrichtung der Vorrichtung gemäß Fig. 1;
- Fig. 6: eine Ansicht der Lenksäule gemäß Pfeil X in Fig. 2;
- Fig. 7: eine räumliche Ansicht des lenkradnahen Bereiches der Lenksäule gemäß Pfeil Y in Fig. 6;
- Fig. 8: einen Querschnitt gemäß Fig. 1, jedoch mit einer alternativen Ausbildung der Klemmelemente.

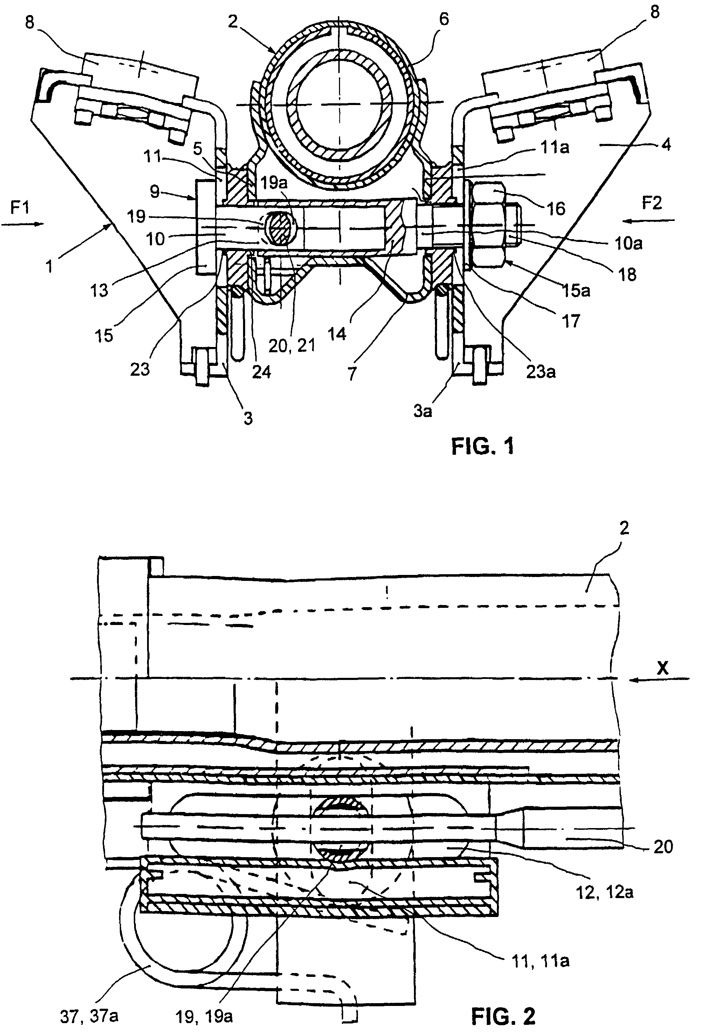

Die in Fig. 1 dargestellte Vorrichtung 1 besteht im wesentlichen aus einem mit dem Fahrzeugaufbau 8 auf eine nicht näher dargestellte Weise verbundenen und zwei parallel und vertikal ausgerichtete Tragteile 3, 3a aufweisenden Lenksäulenträger 4 sowie einem etwa U-förmigen Halter 7 mit zwei ebenfalls parallel und vertikal ausgerichteten Schenkeln 5, 5a, deren freie Enden mit einem Mantelrohr 6 der Lenksäule 2 verschweißt sind. Die Lenksäule 2 kann in der eingestellten Position mittels einer den Halter 7 zwischen den Tragteilen 3, 3a verklemmenden Klemmeinrichtung 9 verriegelt werden.

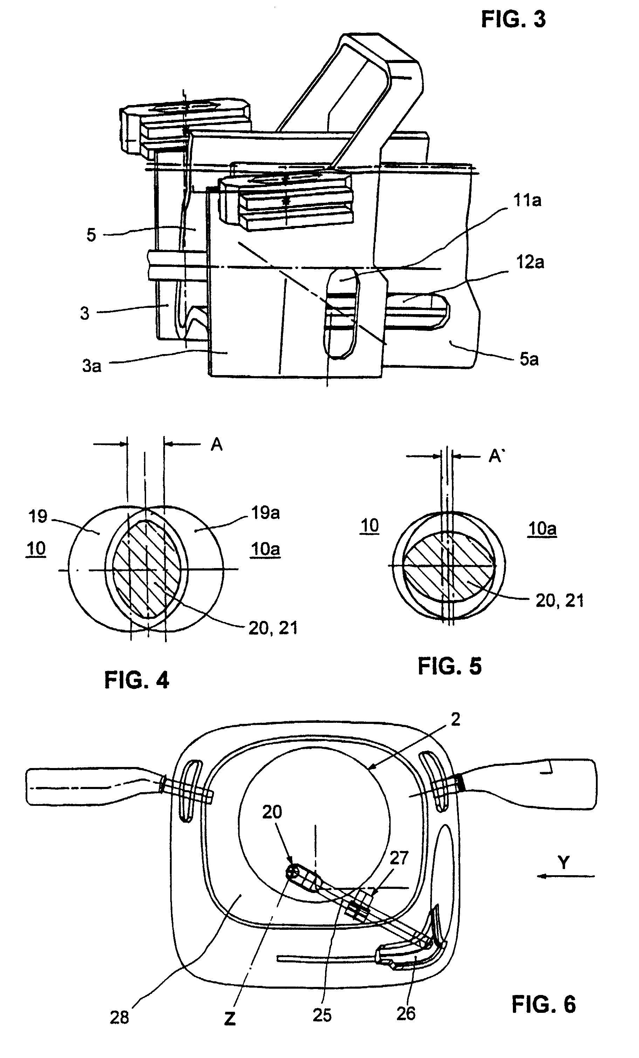

Zur Verstellung der Lenksäule 2 sind, wie in Fig. 3 verdeutlicht, an den jeweiligen Tragteilen 3, 3a etwa senkrecht zur Lenksäule 2 verlaufende Führungsschlitze 11, 11a und an den jeweiligen Schenkeln 5, 5a etwa achsparallel zur Lenksäule 2 angeordnete Führungsschlitze 12, 12a vorgesehen. Die jeweils benachbarten Führungsschlitze 11, 12; 11a, 12a sind dabei überkreuzt angeordnet und bilden somit eine Kulissenführung für zwei in Fahrzeugquerrichtung verspannbar angeordnete Klemmelemente 10, 10a (Fig. 1) der Klemmeinrichtung 9.

Dazu sind die Klemmelemente 10, 10a in Form einer Zylinder-Kolben-Einheit mit einem zylindrischen Teil 14 am Klemmelement 10a und einem Kolbenteil 13 am Klemmelement 10 ausgebildet, wobei das Kolbenteil 13 im zylindrischen Teil 14 axial verschiebbar aufgenommen ist. Die Klemmelemente 10, 10a sind jeweils mit einem Ende durch die Führungsschlitze 11, 12; 11a, 12a durchgeführt und liegen außenseitig mit jeweils einem Kopfteil 15, 15a an den entsprechenden Tragteilen 3, 3a an. Das Kopfteil 15a ist dabei durch eine Mutter 16 und eine zwischen der Mutter 16 und dem Tragteil 3a angeordnete Scheibe 17 gebildet, welche auf einem axial am zylindrischen Teil 14 angeordneten Gewindeschaft 18 montiert sind. Die Lenksäule 2 ist somit einerseits (zur Höhenverstellung) zusammen mit den Klemmelementen 10, 10a in den etwa vertikalen Schlitzführungen 11, 11a und andererseits (zur Längsverstellung) mittels der etwa horizontal angeordneten Führungsschlitzen 12, 12a an den Klemmelementen 10, 10a verschiebbar gelagert.

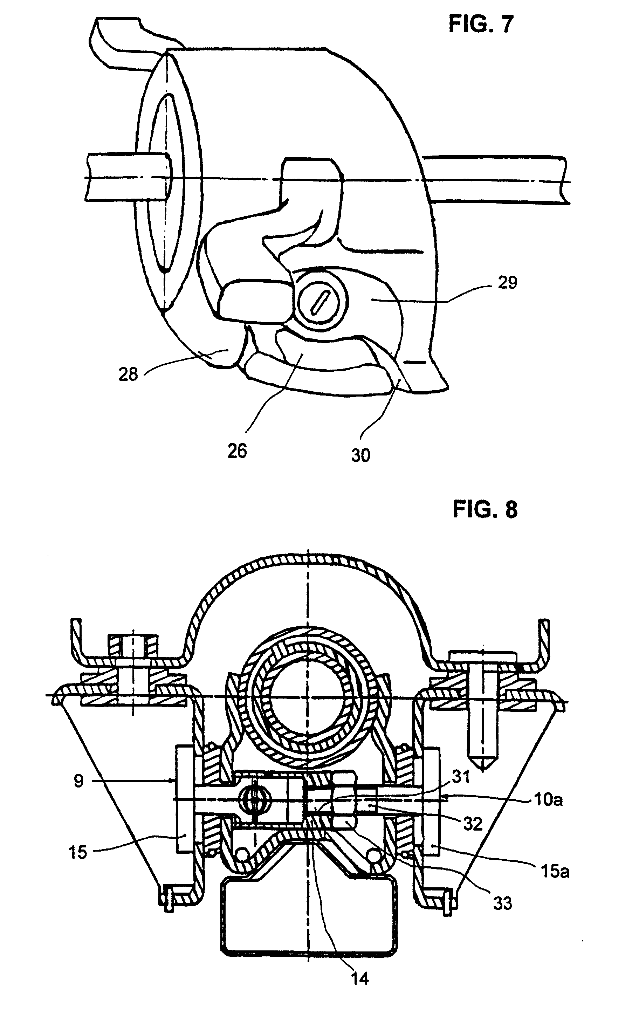

Eine alternative Ausbildung der Klemmeinrichtung 9 ist in Fig. 8 dargestellt. Bei dieser Ausführung ist am zylindrischen Teil 14 des Klemmelementes 10a eine axial angeordnete Gewindebohrung 31 vorgesehen, in die ein Gewindeschaft 32 eingedreht ist. Der Gewindeschaft 32 ist dabei einteilig mit dem Kopfteil 15a ausgebildet.

Zum Justieren der Klemmeinrichtung 9 ist am Gewindeschaft 32 eine Mutter 33 vorgesehen, welche nach der Einstellung des Abstandes zwischen den Kopfteilen 15, 15a am zylindrischen Teil 14 fest angezogen wird.

Zur Erzielung einer optimalen Verstellung und Verriegelung der Lenksäule 2 ist auf den Klemmelementen 10, 10a zwischen den Tragteilen 3, 3a und den Schenkeln 5, 5a jeweils eine Führungsscheibe 22, 22a vorgesehen (Fig. 1 und 8), welche auf den zu den jeweiligen Tragteilen 3, 3a zugewandten Seiten mit jeweils einem Bund 23, 23a in die Führungsschlitze 11, 11a und auf den zu den jeweiligen Schenkeln 5, 5a zugewandten Seiten mit jeweils einem Bund 24, 24a in die Führungsschlitze 12, 12a spielfrei eingreifen. Bei der Verstellung der Lenksäule 2 wird die Verstellbewegung in der etwa vertikalen Richtung durch jeweils eine von unten auf die jeweiligen Führungsscheiben 22, 22a einwirkende Feder 37, 37a unterstützt.

Weiterhin weisen die Klemmelemente 10, 10a entsprechend am Kolbenteil 13 und am zylindrischen Teil 14 jeweils eine Bohrung 19, 19a auf, welche achsparallel zur Lenksäule 2 und teilweise überdeckend angeordnet sind. Die beide Bohrungen 19, 19a durchsetzt eine ebenfalls achsparallel zur Lenksäule 2 angeordnete Betätigungsstange 20 mit einem ovalen Querschnitt 21. Die Betätigungsstange 20 ist an einem Ende im lenkradnahen Bereich an einem Lenkschloßgehäuse 28 (Fig. 6) verdrehbar, aber axial unverschiebbar und am anderen Ende, wie in Fig. 2 gezeigt, in den Bohrungen 19, 19a gleitbar gelagert, so daß bei der Verstellung der Lenksäule 2 die Lage der Betätigungsstange 20 gegenüber der Lenksäule 2 beibehalten wird.

In Fig. 4 und 5 ist die Verspannung der Klemmelemente 10, 10a mittels der Betätigungsstange 20 verdeutlicht. Wie in Fig. 4 gezeigt, ist im entriegelten Zustand der größte Durchmesser der Betätigungsstange 20 im Bereich des ovalen Querschnitts 21 etwa vertikal ausgerichtet, wodurch sich die Klemmelemente 10, 10a jeweils in einer am weitesten voneinandergeschobenen Position befinden. In dieser Lage der Betätigungsstange 20 sind die Bohrungen 19, 19a der Klemmelemente 10, 10a etwa zur Hälfte überdeckt und die Kopfteile 15, 15a (Fig. 1 und 8) der Klemmelemente 10, 10a liegen ohne Vorspannung an den entsprechenden Tragteilen 3, 3a an. Bei der Verdrehung der Betätigungsstange 20 um etwa 90° bewegen sich - infolge der Verdrehung des ovalen Querschnitts 21 - die Klemmelemente 10, 10a zueinander und verspannen dabei den Halter 7 zwischen den Tragteilen 3, 3a. Die Differenz zwischen dem Maß A, welches die maximale Entfernung der vertikalen Mittelachsen der Bohrungen 19, 19a voneinander in entriegelter Stellung angibt, und dem Maß A', welches die minimale Entfernung dieser Mittelachsen voneinander in verriegelter Stellung angibt, bestimmt dabei die maximale Klemmbewegung der Klemmelemente 10, 10a, die im wesentlichen von den Abmessungen des ovalen Querschnitts 21 und der Bohrungen 19, 19a abhängt. Wenn sich, wie in Fig. 5 gezeigt, der größte Durchmesser des ovalen Querschnitts 21 etwa in einer waagerechten Lage befindet, ist die höchste Klemmkraft erreicht und der mit der Lenksäule 2 verbundene Halter 7 am Lenksäulenträger 4 fest eingeklemmt.

Zum Verdrehen der Betätigungsstange 20 zwischen der verriegelten und der entriegelten Stellungen ist - wie in Fig. 6 gezeigt - am lenkradnahen Ende der Betätigungsstange 20 ein etwa senkrecht zur Betätigungsstange 20 angeordneter Betätigungshebels 25 vorgesehen, welcher bei der Verriegelung der Lenksäule 2 an einer am Lenkschloßgehäuse 28 angeordneten Rastvorrichtung 27 hörbar und fühlbar einrastet. Die Rastvorrichtung 27 besteht dabei aus an sich bekannten und deswegen nicht näher dargestellten elastischen Federelementen, welche den zumindest in diesem Bereich als einen runden Stab ausgebildeten Betätigungshebel 25 teilweise kraft- und/oder formschlüssig umschlingen. Die Lage des Betätigungshebels 25 in der entriegelten Stellung ist vereinfacht durch eine strichpunktierte Linie **Z** angedeutet.

Um die Vorrichtung 1 besser bedienen zu können, ist am freien Ende des Betätigungshebels 27 ein Griff 26 vorgesehen, welcher sich in verriegelter Stellung, wie in Fig. 7 dargestellt, in einer Aussparung 30 an einer Lenkschloßmulde 29 befindet. In dieser Lage, welche visuell leicht kontrollierbar ist, kann der Griff 26 bei der Verstellung der Lenksäule 2 sehr günstig erreicht und betätigt werden.

## Patentansprüche

1. Vorrichtung zur Verriegelung einer verstellbaren Lenksäule, insbesondere für Kraftfahrzeuge, welche zwischen zwei Tragteilen des Fahrzeugaufbaus in Führungsschlitzen längs- und/oder höhenverstellbar angeordnet und mittels einer Klemmeinrichtung zum Fahrzeugaufbau verriegelbar ist, wobei die Klemmeinrichtung zwei mittels einer axial verdrehbaren Betätigungsstange verspannbare Klemmelemente aufweist, **dadurch gekennzeichnet**, daß die Klemmelemente (10, 10a) jeweils eine senkrecht zur Klemmbewegung (F1, F2) verlaufende Bohrung (19, 19a) aufweisen, welche parallel zueinander und teilweise überdeckend angeordnet sowie mit der einen ellipsen- bzw. ovalförmigen Querschnitt (21) aufweisenden Betätigungsstange (20) durchsetzt sind.

2. Vorrichtung nach Anspruch 1, **dadurch gekennzeichnet**, daß zumindest der ellipsen- bzw. ovalförmige Bereich der Betätigungsstange (20) sowie die Bohrungen (19, 19a) an den Klemmelementen (10, 10a) - in Draufsicht und/oder Seitensicht gesehen - parallel zur Lenksäule (2) angeordnet sind.

3. Vorrichtung nach Anspruch 1 oder 2, **dadurch gekennzeichnet**, daß die Lenksäule (2) einen zwischen den Tragteilen (3, 3a) angeordneten U-förmigen Halter (7) mit zwei parallel zueinander und vertikal ausgerichteten Schenkeln (5, 5a) aufweist.

4. Vorrichtung nach einem der Ansprüche 1 bis 3, **dadurch gekennzeichnet**, daß die Führungsschlitze (11, 11a) für die Höhenverstellung der Lenksäule (2) an den Tragteilen (3, 3a) und die Führungsschlitze (12, 12a) für die Längsverstellung an den Schenkeln (5, 5a) ausgebildet sind, wobei die Führungsschlitze (11, 11a) zur Lenksäule (2) etwa achsparallel und die Führungsschlitze (12, 12a) etwa senkrecht zur Lenksäule (2) angeordnet sind.

5. Vorrichtung nach einem der Ansprüche 1 bis 4, **dadurch gekennzeichnet**, daß die Klemmelemente (10, 10a) jeweils mit einem Ende durch die Führungsschlitze (11, 12; 11a, 12a) durchgeführt sind und außenseitig mit jeweils einem Kopfteil (15, 15a) an den Tragteilen (3, 3a) anliegen.

6. Vorrichtung nach einem der Ansprüche 1 bis 5, **dadurch gekennzeichnet**, daß die Klemmelemente (10, 10a) im Bereich der Bohrungen (19, 19a) teilweise überdeckend in- oder hintereinandergreifen und zueinander verschiebbar ausgebildet sind.

7. Vorrichtung nach Anspruch 6, **dadurch gekennzeichnet**, daß die Klemmelemente (10, 10a) in Form einer Zylinder-Kolben-Einheit mit einem zylindrischen Teil (14) am Klemmelement (10a) und einem Kolbenteil (13) am Klemmelement (10) ausgebildet sind, wobei das Kolbenteil (13) im zylindrischen Teil (14) axial verschiebbar aufgenommen ist.

8. Vorrichtung nach einem der Ansprüche 1 bis 7, **dadurch gekennzeichnet**, daß die Bohrungen (19, 19a) sowie der ellipsen- bzw. ovalförmige Bereich der Betätigungsstange (20) zwischen den Schenkeln (5, 5a) angeordnet sind.

9. Vorrichtung nach einem der Ansprüche 1 bis 8, **dadurch gekennzeichnet**, daß die Betätigungsstange (20) an der Lenksäule (2) verdrehbar, aber axial unverschiebbar gelagert und im nichtverriegelten Zustand längsverschiebbar in den Bohrungen (19, 19a) der Klemmelemente (10, 10a) geführt ist.

10. Vorrichtung nach einem der Ansprüche 1 bis 9, **dadurch gekennzeichnet**, daß zum Verdrehen der Betätigungsstange (20) zwischen der verriegelten und der entriegelten Stellungen am von den Klemmelementen (10, 10a) abgekehrten Ende der Betätigungsstange (20) ein etwa rechtwinkliger Betätigungshebel (25) mit einem Griff (26) vorgesehen ist.

11. Vorrichtung nach einem der Ansprüche 1 bis 10, **dadurch gekennzeichnet**, daß die Lenksäule (2) eine Lenkschloßmulde (29) mit einer Aussparung (30) für den Griff (26) aufweist, wobei an der Lenkschloßmulde (29) bzw. einem Lenkschloßgehäuse (28) eine Rastvorrichtung (27) zum akustischen und/oder fühlbaren Markieren der verriegelten Stellung der Betätigungsstange (20) bzw. des Betätigungshebels (25) vorgesehen ist.

12. Vorrichtung nach einem der Ansprüche 1 bis 11, **dadurch gekennzeichnet**, daß zum Justieren der Klemmeinrichtung (9) zumindest ein Klemmelement (10a) mit einem in Richtung der Klemmbewegung (F1, F2) verstellbaren Kopfteil (15a) ausgebildet ist.

13. Vorrichtung nach Anspruch 12, **dadurch gekennzeichnet**, daß das Kopfteil (15a) mit einem in eine Gewindebohrung (31) am Klemmelement (10a) eindrehbaren Gewindeschaft (32) ausgebildet und mittels einer Mutter (33) am Klemmelement (10a) fixierbar ist.

14. Vorrichtung nach Anspruch 12, **dadurch gekennzeichnet**, daß das Klemmelement (10a) am freien Ende mit einem Gewindeschaft (34) ausgebildet und das Kopfteil (15a) durch eine am Gewindeschaft (34) montierte Mutter (35) gebildet ist, wobei zwischen der Mutter (35) und dem Tragteil (3a) eine Scheibe (36) vorgesehen ist.

15. Vorrichtung nach einem der Ansprüche 1 bis 14, **dadurch gekennzeichnet**, daß auf den Klemmelementen (10, 10a) zwischen den jeweiligen Tragteilen (3, 3a) und den jeweiligen Schenkeln (5, 5a) im Bereich der sich kreuzenden Führungsschlitze 11, 12; 11a, 12a) jeweils eine Führungsscheibe (22, 22a) vorgesehen ist.

## Claims

1. Device for locking a displaceable steering column, in particular for motor vehicles, which is arranged so as to be longitudinally and/or vertically displaceable in guide slots between two supporting portions of the vehicle body and can be locked to the vehicle body by means of a clamping device, wherein the clamping device comprises two clamping elements that can be braced by means of an axially rotatable operating rod, characterised in that the clamping elements (10, 10a) each comprise a bore (19, 19a) running perpendicularly to the clamping movement (F1, F2), which are arranged parallel to each other and partially overlapping and through which passes the operating rod (20) having an elliptical or oval cross-section (21).

2. Device according to claim 1, characterised in that at least the elliptical or oval region of the operating rod (20) as well as the bores (19, 19a) in the clamping elements (10, 10a), seen in a top view and/or side view, are arranged parallel to the steering column (2).

3. Device according to claim 1 or 2, characterised in that the steering column (2) comprises a U-shaped holder (7) arranged between the supporting portions (3, 3a), with two arms (5, 5a) oriented parallel to each other and vertically.

4. Device according to any of claims 1 to 3, characterised in that the guide slots (11, 11a) for vertical displacement of the steering column (2) are formed on the supporting portions (3, 3a) and the guide slots (12, 12a) for longitudinal displacement are formed on the arms (5, 5a), wherein the guide slots (11, 11a) are arranged roughly with axes parallel to the steering column (2) and the guide slots (12, 12a) are arranged roughly perpendicularly to the steering column (2).

5. Device according to any of claims 1 to 4, characterised in that the clamping elements (10, 10a) in each case extend with one end through the guide slots (11, 12; 11a, 12a) and on the outside each abut by a head portion (15, 15a) against the supporting portions (3, 3a).

6. Device according to any of claims 1 to 5, characterised in that the clamping elements (10, 10a) in the region of the bores (19, 19a) engage in or behind each other, partially overlapping, and are slidable relative to each other.

7. Device according to claim 6, characterised in that the clamping elements (10, 10a) are in the form of a piston and cylinder unit with a cylindrical portion (14) on the clamping element (10a) and a piston portion (13) on the clamping element (10), wherein the piston portion (13) is held axially slidably in the cylindrical portion (14).

8. Device according to any of claims 1 to 7, characterised in that the bores (19, 19a) as well as the elliptical or oval region of the operating rod (20) are arranged between the arms (5, 5a).

9. Device according to any of claims 1 to 8, characterised in that the operating rod (20) is mounted rotatably, but axially non-slidably on the steering column (2) and in the unlocked state is guided longitudinally slidably in the bores (19, 19a) of the clamping elements (10, 10a).

10. Device according to any of claims 1 to 9, characterised in that an approximately right-angled operating lever (25) with a handle (26) is provided for rotation of the operating rod (20) between the locked and unlocked positions at the end of the operating rod (20) facing away from the clamping elements (10, 10a).

11. Device according to any of claims 1 to 10, characterised in that the steering column (2) comprises a steering lock depression (29) with a recess (30) for the handle (26), wherein on the steering lock depression (29) or a steering lock housing (28) is provided a latch device (27) for acoustic and/or tactile marking of the locked position of the operating rod (20) or of the operating lever (25).

12. Device according to any of claims 1 to 11, characterised in that, for adjustment of the clamping device (9), at least one clamping element (10a) is formed with a head portion (15a) displaceable in the direction of the clamping movement (F1, F2).

13. Device according to claim 12, characterised in that the head portion (15a) is constructed with a threaded shank (32) that can be screwed into a threaded bore (31) in the clamping element (10a), and can be fixed to the clamping element (10a) by means of a nut (33).

14. Device according to claim 12, characterised in that the clamping element (10a) is constructed at the free end with a threaded shank (34), and the head portion (15a) is formed by a nut (35) mounted on the threaded shank (34), wherein between the nut (35) and the supporting portion (3a) is provided a washer (36).

15. Device according to any of claims 1 to 14, characterised in that on the clamping elements (10, 10a) between the respective supporting portions (3, 3a) and the respective arms (5, 5a) in the region of the intersecting guide slots (11, 12; 11a, 12a) is provided in each case a guide washer (22, 22a).

## Revendications

1. Dispositif de verrouillage d'une colonne de direction réglable, en particulier pour des véhicules automobiles, qui est disposée entre deux éléments de support de la structure du véhicule, avec possibilité de réglage en longueur et/ou en hauteur dans des fentes de guidage, et peut être verrouillée par rapport à la structure du véhicule à l'aide d'un dispositif de blocage, le dispositif de blocage comprenant deux éléments de blocage qui peuvent être serrés à l'aide d'une tige d'actionnement tournant axialement, caractérisé par le fait que les éléments de blocage (10, 10a) comportent chacun un trou (19, 19a) qui s'étend perpendiculairement à la direction du mouvement de blocage (F1, F2), lesquels trous disposés parallèlement l'un à l'autre et se chevauchent partiellement et sont traversés par une tige d'actionnement (20) à section transversale elliptique ou ovale.

2. Dispositif selon la revendication 1, caractérisé par le fait qu'au moins la partie elliptique ou ovale de la tige d'actionnement (20) et les trous (19,19a) dans les éléments de blocage (10, 10a) - vu en vue de dessus et/ou en vue de côté - sont disposés parallèlement à la colonne de direction (2).

3. Dispositif selon la revendication 1 ou 2, caractérisé par le fait que la colonne de direction (2) comporte un support (7) en forme de U, avec deux ailes (5, 5a) mutuellement parallèles dirigées verticalement, qui est disposé entre les deux éléments de support (3, 3a).

4. Dispositif selon une des revendications 1 à 3, caractérisé par le fait que les fentes de guidage (11, 11a) pour le réglage en hauteur de la colonne de direction (2) sont aménagées sur les éléments de support (3, 3a) et que les fentes (12, 12a) de guidage pour le réglage en longueur sont aménagées sur les ailes (5, Sa), les fentes de guidage (11, 11a) étant sensiblement parallèles à l'axe la colonne de direction (2) et les fentes de guidage (12, 12a) étant sensiblement perpendiculaires à ladite colonne de direction (3, 3a).

5. Dispositif selon une des revendications 1 à 4, caractérisé par le fait que les éléments de blocage (10, 10a) s'engagent avec une extrémité chaque fois dans les fentes de guidage (11, 12; 11a, 12a) et sont en appui côté extérieur sur les éléments de support (3, 3a) par l'intermédiaire d'un élément formant tête (15, 15a).

6. Dispositif selon une des revendications 1 à 5, caractérisé par le fait que les éléments de blocage (10, 10a), dans la région des trous (19, 19a), sont agencés de manière à pouvoir s'engager l'un dans l'autre ou l'un derrière l'autre en se chevauchant partiellement et à pouvoir coulisser l'un par rapport à l'autre.

7. Dispositif selon la revendication 6, caractérisé par le fait que les éléments de blocage (10, 10a) sont agencés sous la forme d'un ensemble cylindre-piston avec un élément cylindre (14) sur l'élément de blocage (10a) et un élément piston (13) sur l'élément de blocage (10), l'élément piston (13) étant monté coulissant dans la direction axiale dans l'élément cylindre (14).

8. Dispositif selon une des revendications 1 à 7, caractérisé par le fait que les trous (19, 19a) ainsi que la partie elliptique ou ovale de la tige d'actionnement (20) sont disposés entre les ailes (5, 5a).

9. Dispositif selon une des revendications 1 à 8, caractérisé par le fait que la tige d'actionnement (20) est montée tournante sur la colonne de direction (2) mais fixe dans la direction axiale et, à l'état non verrouillé, est guidée coulissante longitudinalement dans la trous (19, 19a) des éléments de blocage (10, 10a).

10. Dispositif selon une des revendications 1 à 9, caractérisé par le fait que pour amener la tige d'actionnement (20) par rotation de la position verrouillée dans la position déverrouillée, il est prévu, à l'extrémité de la tige d'actionnement (20) éloignée des éléments de blocage (10, 10a), un levier d'actionnement (25) coudé sensiblement à angle droit avec une poignée (26).

11. Dispositif selon une des revendications 1 à 10, caractérisé par le fait que la colonne de direction (2) comporte un logement de verrou de direction (29) avec un évidement (30) pour la poignée (26), un dispositif d'encliquetage (27) pour indiquer de manière acoustique et/ou sensitive la position verrouillée de la tige d'actionnement (20) ou du levier d'actionnement (25) étant prévu dans le logement de verrou de direction (29) ou sur le boîtier de verrou de direction (28).

12. Dispositif selon une des revendications 1 à 11, caractérisé par le fait que pour le réglage du dispositif de blocage (9) au moins un élément de blocage (10a) comporte un élément formant tête (15a) réglable dans la direction du mouvement de blocage (F1, F2).

13. Dispositif selon la revendication 12, caractérisé par le fait que l'élément formant tête (15a) comporte une tige filetée (32) qui est vissée dans un trou taraudé (31) dans l'élément de blocage (10a) et peut être bloquée sur l'élément de blocage (10a) à l'aide d'un écrou (33).

14. Dispositif selon la revendication 12, caractérisé par le fait que l'élément de blocage (10a), à son extrémité libre, est pourvu d'une tige filetée (34) et que l'élément formant tête (15a) est formé d'un écrou (35) monté sur la tige filetée (34), une rondelle (36) étant placée entre l'écrou (35) et l'élément de support (3a).

15. Dispositif selon une des revendications 1 à 14, caractérisé par le fait qu'il est prévu chaque fois une rondelle de guidage (22, 22a) sur les éléments de blocage (10, 10a), entre les éléments de support (3, 3a) concernés et les ailes (5, 5a) concernées, dans la région des fentes de guidage (11,12; 11a, 12a) qui se croisent.
